Europäisches Patentamt

(19) European Patent Office

Office européen des brevets

(11) Publication number: **0 034 453**
A1

(12) # EUROPEAN PATENT APPLICATION

(21) Application number: **81300522.0**

(22) Date of filing: **09.02.81**

(51) Int. Cl.³: **B 29 C 17/02**
**B 32 B 3/00, E 04 C 1/00**

(30) Priority: **09.02.80 GB 8004412**

(43) Date of publication of application:
**26.08.81 Bulletin 81/34**

(84) Designated Contracting States:
**BE DE FR GB IT NL SE**

(71) Applicant: **The British Petroleum Company Limited**
**Britannic House Moor Lane**
**London EC2Y 9BU(GB)**

(72) Inventor: **Ansell, Martin Philip**
**University of Bath School of Materials Science**
**Claverton Down Bath, BA2 7AY(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) Cellular composites and process and apparatus for their manufacture.

(57) A rigid multitubular constructional article comprising an array of hollow tubular cells having rigid walls which was the form of a ribbon or sheet of constructional material containing folds ($C_1$, $C_2$, $C_3$) which define the tubular cells. The tubular cells preferably lie parallel one another and the walls are preferably fibre reinforced resin. The article can be formed by winding resin impregnated fibre on suitable former-rods, curing and then removing the rods.

FIG.2

EP 0 034 453 A1

0034453

1

## CELLULAR COMPOSITES AND PROCESS AND APPARATUS FOR THEIR MANUFACTURE.

The present invention relates to a constructional article suitable for use in the building or engineering industries as a building or load-bearing member or a core material, for example, as a substitute for wood or metal.

J E Gordon and G Jeronimidis have described in Nature, Volume 252, Nov 8, 1974 at page 116, composite models resembling timber made by glueing together in parallel relationship a number of individual tubes formed by winding glass and carbon fibres into hollow helices with resin. The composite models were said to have experimental works of fracture up to about $40 \times 10^4 Jm^{-2}$.

German patent application 2836418 discloses a constructional material for lightweight sandwich elements manufactured by assembling together in parallel relationship a plurality of small-diameter tubes to form a close-packed array, soaking the tubes with synthetic resin and curing the resin to form a so-called core filling material.

US Patent no: 3673058 discloses a honeycomb core constructed of a plurality of generally sinusoidally shaped sheets or ribbons which are bonded together at the nodes of adjacent ribbons to form generally hexagonal shaped cells.

The present invention in its broadest aspect provides a rigid multitubular constructional article comprising a sheet or ribbon of constructional material, which may be fibre-reinforced, convoluted to form a series of tubular cells, which simulates the structurally - efficient arrays of hollow cells observed in timber without the need to bond together individual tube units. Each of the hollow tubular cells walls of the present invention has the form of a portion of a sheet or ribbon of rigid material which folds back on itself (i.e. is convoluted) to form the individual tubular cell.

A preferred embodiment of the present invention provides a rigid multitubular constructional article comprising a sheet or ribbon of constructional material convoluted to form a series of substantially parallel alternating folds, adjacent folds being in longitudinal bonded contact to give a series of substantially parallel tubular cells.

The constructional material forming the constructional article of the present invention can comprise, for example, metal, plastics or a cementitious composition. The constructional material preferably comprises a cured synthetic resin, for example, cure unsaturated polyester resin, phenolic resin or epoxy resin.

The constructional material is preferably reinforced with fibrous reinforcement. The fibres within such fibrous reinforcement can comprise, for example, straight, curved, tangled, woven or non-woven fibres. The fibres can be, for example, stiff, flexible or "soft hand" fibres. Preferably the fibres have good tensile strength. The fibrous reinforcement can be, for example, mineral, synthetic or natural fibre, for example, glass fibre, carbon fibre, aramid fibre, polyamide fibre, wood fibre, annual crop fibre or hydrid fibres. Glass fibre is preferred.

Where fibrous reinforcement is present in the constructional article of the present invention the fibres may lie at any angle to the axes of the tubular cells or tubular elements, i.e. the angles lie within the range 0 to 90° in relation to said axes. Preferably the fibres lie in directions which are not parallel to the axes of the tubular cells or tubular elements. For example, it is preferred that the angle or angles between the axis of each tubular cell and the fibres contained in the wall thereof lie in the range 0° to 45°, most preferably 5° to 30° for improved toughness in the article. The angle referred to is the angle at a point "x" between (1) an imaginary plane containing the longitudinal axis of the tubular cell wall and cutting a fibre at the point "x" and (2) the fibre itself. In the case of a curved fibre, as for example in a cylindircal tubular cell wall, (2) is the tangent to the fibre at the point "x". However, the fibres may be randomly oriented in relation to the axes of the tubular elements if desired.

The invention further comprises a process for manufacturing a rigid multitubular constructional article in accordance with the present invention comprising winding a web of reinforcing fibre between two rows of closely spaced parallel former rods the web being impregnated with curable resin and disposed between the rods in the form of a series of parallel alternating folds so that adjacent folds are in longitudinal contact, and causing the resin to cure.

The impregnation of the web with the curable resin can be carried out before or after the web is wounc on the former-rods, or during the winding process itself.

The rigid multitubular constructional article of the present invention can be manufactured directly in the form of a wide variety of useful articles, e.g. a beam element, a lintel or a panel, or can undergo further fabrication operations, e.g. machining, lamination or filling to form useful articles.

The invention is further described with reference to the accompanying drawings wherein Fig. 1 shows diagrammatically a process for manufacturing the constructional article of the present invention, Fig. 2 shows a perspective view of a glass-fibre reinforced polyester resin constructional article according to the present invention, and Fig. 3 shows a cut-away view of a laminated article embodying the constructional article.

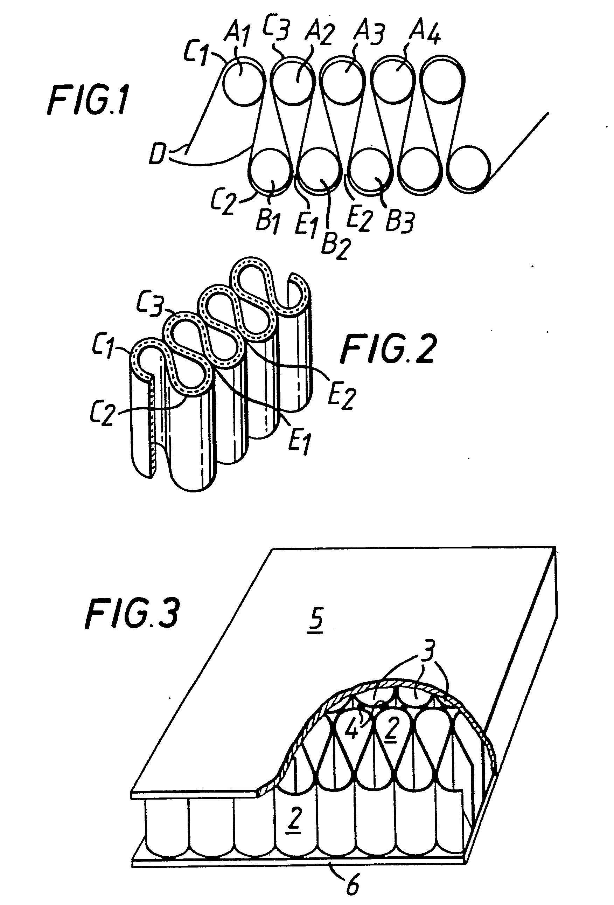

In Fig. 1 two parallel rows A and B of closely spaced former-rods made from cylindrical rods of polytetrafluoroethylene (PTFE) or steel rods coated with PTFE are set up in a square frame (not shown). As each rod is introduced, in the order $A_1$, $B_1$, $A_2B_2$....., woven glass fabric D impregnated with heat curable polyester resin is wound around the rod to form the series of parallel alternating folds $C_1$, $C_2$, $C_3$.....etc. It is preferred to use a resin that does not shrink excessively, and most preferably expands slightly, on curing to facilitate later removal of the rods. The resin-impregnated fabric optionally can be introduced so that neither the warp nor weft thereof lie parallel to the axes of the rods, i.e. the fabric is wound "on the bias" with respect to the axes of the rods and so that the resin bridges adjacent folds, e.g. at $E_1$, $E_2$ .. etc. In Fig. 1, the folds at $E_1$, $E_2$....., are shown slightly separated for clarity but in practise the adjacent folds are in longitudinal contact at least during the curing of the resin. The rods are then longitudinally tensioned in the frame by conventional means and the frame is placed in an oven until curing is complete. The former-rods are then withdrawn to give the constructional article shown in Fig. 2. In Fig. 1 the distance separating the axes of the parallel rows of former-rods is shown as just over one rod diameter for clarity. Whilst this distance can be increased or decreased as desired, it is preferred to use as short a distance as possible to give increased strength to the final article.

The general technique described in the preceding paragraph can be employed to produce a variety of different constructional articles in accordance with the present invention. For example, the web may be conventionally woven or triaxially woven fabric, a non-woven fabric, a pre-preg, a mat or may be built up from filament, spun thread or rovings. The former-rods can have any desired cross-sectional shape, for example circular, elliptical, square or triangular. They may be slightly tapered to facilitate removal from the produced article. The distance separating the parallel rows of former rods can be varied to increase or decrease the thickness of the produced multitubular constructional article as desired. The spacing between adjacent rods within each row must be such that the adjacent folds in the resin impregnated web contact one another.

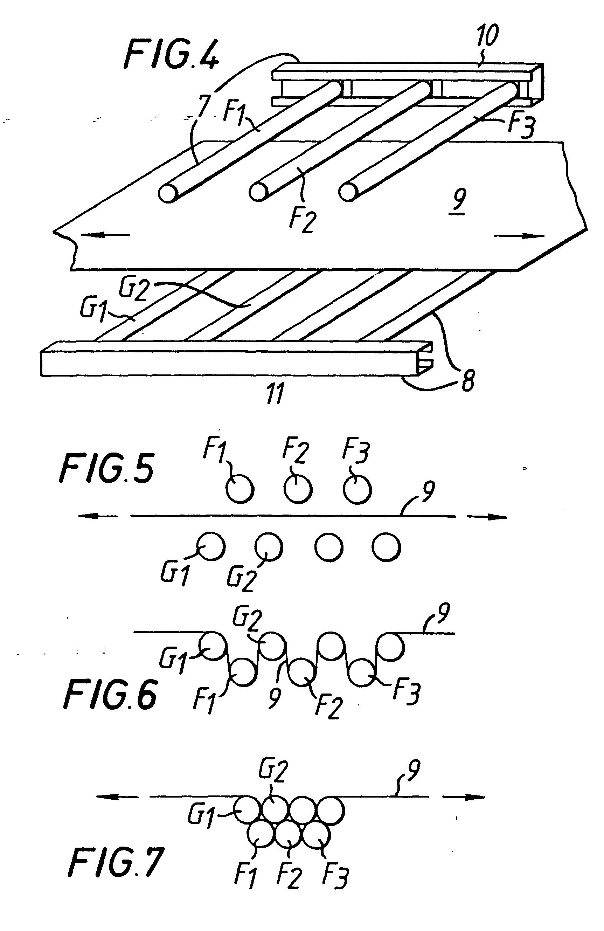

The resin employed to impregnate the web can be any curable resin, for example, resins crosslinkable by chemical or thermal treatment. Figures 4, 5, 6 & 7 show diagrammatically a method of producing a rigid multitubular constructional article according to the present invention. Figure 4 shows a perspective view of two oppositely disposed fork members 7, 8 situated one above the other and a horizontal sheet of curable resin impregnated woven glass fibre 9 situated between the forks. The ends of the impregnated sheet are maintained under tension. The forks are slideably mounted on a jig so that they can be moved in a vertical direction. The fork 7 comprises a row of former-rods $F_1$ $F_2$ $F_3$, each rod being slideably mounted at one end in a channel member 10. The fork 8 comprises former rods $G_1$ $G_2$...., mounted in channel member 11 in a similar manner. Figure 5 shows a cross-sectional view through the former-rods and the resin impregnated fibre. To form the article the two fork members are moved towards each other so that one set of former-rods passes through the spaces between the other set to give the arrangement shown in cross section in Fig 6, the tension in the sheet being relaxed slightly to allow the sheet to take up the serpentine path shown in Fig 6. The former-rods within each row are then mechanically urged together so that the ends slide towards one another within the channel members, until the former rods and sheet take up the arrangement shown in cross section in Fig 7.

The curable resin is then cured by heating, and finally the produced article is removed from the rods. The produced article has a shape similar to the article depicted in Fig 2.

The rigid multitubular constructional article of the present invention finds a variety of uses in the construction and engineering industries for example as a replacement for timber or metal in flooring, roofing or partitioning applications. It may be employed, for example, in sheet or strip form or a plurality of sheets or strips may be laminated or cross-laminated together to form thicker sections or blocks. The multitubular constructional article of the present invention can if desired be laminated with conventional materials, for example sheet metal, timber or synthetics. Fig 3 shows a laminate built up from strips 2, 3, of the constructional article of the present invention bonded together side-by-side at their longitudinal lines of contact (4) and skinned over with sheets 5, 6 of a sheet material, for example, timber or synthetic or metal sheet.  A laminate of this type can be used, for example, as a light-weight flooring material.

Alternatively, if desired, lintels, sheets or panels for example, may be formed in accordance with the constructional article of the present invention wherein the axes of the tubular elements lie along the axis of the lintel or parallel to the surface of the sheet or panel.

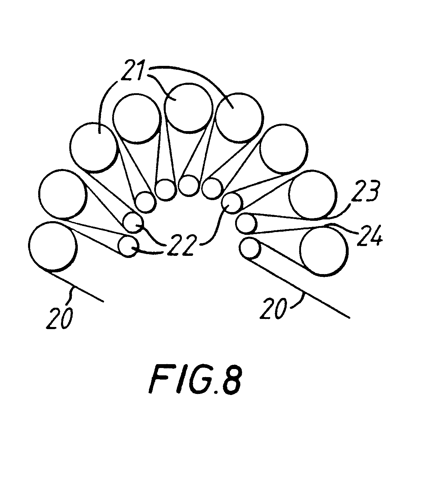

Figure 8 shows diagramatically in cross section a rigid multitibular constructional article according to the present invention formed by winding a resin impregnated fabric 20 around two rows of former-rods, the first row 21 having a larger diameter than the second row 22. The rods wound with resin impregnated fabric are shown slightly separated from one another in the diagram for the sake of clarity.  In practise the adjacent folds of resin impregnated fabric, e.g. 23,24, contact one another so that they bond together during the curing.  As can be seen from Figure 8, the article produced by curing the resin and withdrawing the former rods has a curved profile. If desired, additional former rods may be employed to form two concentric rings of former rods and thus produce an article having the form of a pipe.

Claims:

1. A rigid multitubular constructional article comprising an array of hollow tubular cells having rigid walls characterised in that each of the hollow tubular cell walls has the form of a portion of a sheet or ribbon of rigid constructional material which folds back on itself to form the tubular cell.

2. An article as claimed in claim 1 characterised in that the sheet or ribbon of constructional material is folded back on itself to form a series of substantially parallel alternating folds, adjacent folds being in longitudinal bonded contact so that the tubular cells lie substantially parallel to one another

3. An article as claimed in claim 1 or 2 characterised in that the constructional material comprises a cured synthetic resin.

4. An article as claimed in any one of the preceding claims characterised in that the resin is fibre reinforced.

5. An article as claimed in claim 4 characterised in that the fibres in the wall of a tubular cell lie at an angle between $0°$ and $45°$ in relation to the direction of the axis of the tubular cell.

6. An article as claimed in claim 4 characterised in that the fibres in the wall of a tubular cell lie at an angle between $5°$ and $30°$ in relation to the direction of the axis of the tubular cell.

7. An article as claimed in claim 4, 5 or 6 characterised in that the fibre reinforcement is woven or non-woven mat.

8. A process for manufacturing the article claimed in any one of claims 4 to 7 characterised in that a web of reinforcing fibre is wound between two rows of closely spaced parallel former-rods the web being impregnated with curable resin and disposed between the rods in the form of a series of parallel alternating folds so that adjacent folds are in longitudinal contact, and causing the resin to cure.

9.     A process as claimed in claim 8 characterised in that the former
       rods are tapered to facilitate removal from the article.

10.    A process as claimed in claim 8 or 9 characterised in that the
       former rods are fabricated from polytetrafluoroethylene or are
       coated therewith to facilitate removal from the article.

11.    Apparatus for manufacturing the article claimed in claim 1 comprising
       a pair of oppositely disposed fork members 7, 8 each fork member
       comprising a channel member 10, 11 and a set of former rods
       F, G slideably mounted therein, at least one of the said fork
       members being slideably  mounted so that one set of former rods
       may pass through the spaces between the other set of former rods.

FIG.1

FIG.2

FIG.3

FIG.4

10

7 F₁

F₃

F₂

9

G₂

G₁

8

11

FIG.5

F₁ F₂ F₃

9

G₁ G₂

FIG.6

G₂

G₁

9

F₁ 9 F₂ F₃

FIG.7

G₂

9

G₁

F₁ F₂ F₃

FIG.8

European Patent
Office

**EUROPEAN SEARCH REPORT**

| | DOCUMENTS CONSIDERED TO BE RELEVANT | | CLASSIFICATION OF THE APPLICATION (Int Cl ) |
|---|---|---|---|
| Category | Citation of document with indication, where appropriate of relevant passages | Relevant to claim | |
| | DE - A - 1 778 148 (F. BECKER)<br><br>* Page 2, lines 23-25; claims 7-11; figures 5,6 *<br><br>-- | 1-4,7 | B 29 C 17/02<br>B 32 B 3/00<br>E 04 C 1/00 |
| | US - A - 2 481 049 (A.J. STAMM et al.)<br><br>* Whole document *<br><br>-- | 8 | |
| A | US - A - 3 989 789 (R.D. BROOKHART) | | TECHNICAL FIELDS SEARCHED (Int Cl ) |
| A | US - A - 3 245 121 (R.W. GRAFF) | | |
| A | FR - A - 2 319 481 (STENI A/S) | | B 29 C 17/02<br>B 29 D 3/02<br>B 28 B 11/08 |
| A | FR - A - 2 317 096 (FRASER I.K.) | | |
| A | FR - A - 1 261 791 (FILON PLASTICS CORP.)<br><br>---- | | |

CATEGORY OF CITED DOCUMENTS

X: particularly relevant
A: technological background
O: non-written disclosure
P: intermediate document
T theory or principle underlying the invention
E: conflicting application
D: document cited in the application
L: citation for other reasons

&: member of the same patent family
corresponding document

The present search report has been drawn up for all claims

| Place of search | Date of completion of the search | Examiner |
|---|---|---|
| The Hague | 14-05-1981 | VAN THIELEN |

EPO Form 1503 1  06 78